# FASCICULE DE BREVET EUROPEEN

(11) **EP 4 410 653 B1**
(45) Date de publication et mention de la délivrance du brevet: **11.06.2025**
(21) Numéro de dépôt: 24155332.0
(22) Date de dépôt: 01.02.2024
(51) Int. Cl.: B62M 6/90, B62J 43/13, B62J 43/23, B62J 43/28, B62K 19/40, B60K 1/04, B60L 50/20, B60L 50/64, B60L 50/60, B60L 53/80, H01M 10/46, H01M 50/249, H02J 7/00, H01R 13/453

(54) **UNITÉ D'ALIMENTATION ÉLECTRIQUE AMOVIBLE ET VÉHICULE À CONNECTIQUE PROTÈGÉE**
ABNEHMBARE STROMVERSORGUNGSEINHEIT UND FAHRZEUG MIT GESCHÜTZTEN VERBINDUNGSANSCHLÜSSEN
REMOVABLE POWER SUPPLY UNIT AND VEHICLE WITH PROTECTED CONNECTOR

(30) Priorité: 02.02.2023 FR 2300989
(43) Date de publication de la demande: 07.08.2024
(73) Titulaire: G. Cartier Technologies, 74302 Cluses (FR)
(72) Inventeur: DAVIS, Bruce, 74300 THYEZ (FR); BOISIER, Pierre, 74130 BRIZON (FR); BREHERET, Jean-Luc, 74300 CHATILLON SUR CLUSES (FR)
(74) Mandataire: Cabinet Poncet

(56) Documents cités:
- EP-A1- 2 479 865
- EP-A1- 3 878 724
- WO-A1-2012/014968
- CN-A- 107 863 470

## Description

### DOMAINE TECHNIQUE DE L'INVENTION

La présente invention concerne le domaine des alimentations électriques embarquées et amovibles pour véhicules.

De telles alimentations électriques embarquées et amovibles peuvent alimenter divers équipements des véhicules. Elles peuvent notamment servir à alimenter les moteurs d'assistance dans le cas des véhicules légers à assistance électrique tels que des bicyclettes, des trottinettes, des tricycles, ....

De telles alimentations électriques embarquées et amovibles comprennent une batterie d'accumulateurs électriques. La recharge de la batterie d'accumulateurs électriques est souvent assurée par un chargeur externe que l'utilisateur doit connecter à la batterie d'accumulateurs électriques. Le chargeur externe est soit connecté en permanence à une source extérieure d'énergie électrique, soit connectable à volonté à ladite source extérieure d'énergie électrique.

On a déjà proposé une unité d'alimentation électrique comprenant un chargeur embarqué, fixé à une extrémité de la batterie d'accumulateurs électriques, et connecté en permanence à ladite batterie d'accumulateurs électriques. Un câble de connexion électrique permet à l'utilisateur d'établir une connexion électrique entre le chargeur embarqué et une source extérieure d'énergie électrique afin d'assurer une recharge de la batterie d'accumulateurs électriques.

Les unités d'alimentation électrique les plus couramment utilisées sont amovibles, de forme allongée, et comportent, à l'une de leurs extrémités, un connecteur de sortie conformé pour coopérer avec un connecteur de véhicule correspondant prévu sur le véhicule pour établir la conduction du courant électrique entre la batterie d'accumulateurs électriques et l'équipement à alimenter dans le véhicule.

Le connecteur de sortie et le connecteur de véhicule sont souvent munis d'un système d'aimants qui assurent l'attraction des connecteurs l'un par rapport à l'autre et qui aident ainsi à réaliser une connexion franche et une déconnexion franche, réduisant les risques de corrosion des conducteurs par étincelles.

La recharge de la batterie d'accumulateurs électriques à l'aide d'un chargeur embarqué se fait le plus souvent lorsque l'unité d'alimentation électrique est extraite du véhicule, généralement pour être transportée dans un local surveillé où se trouve une connexion à la source extérieure d'énergie électrique. L'unité d'alimentation électrique se trouve alors généralement posée sur le sol ou sur un support, et son connecteur de sortie est accessible. Les conducteurs du connecteur de sortie sont alors généralement apparents.

En fonctionnement normal, il n'y a entre les conducteurs du connecteur de sortie qu'une tension continue égale à la tension de sortie de la batterie d'accumulateurs, généralement de 36 V ou 40 V, pouvant atteindre 55 V lorsque la batterie est complètement chargée. Une telle tension continue, inférieure à 60 V, satisfait les normes de sécurité applicables dans le cas d'un local mouillé. Elle ne présente donc pas de danger pour l'utilisateur, ce dernier pouvant toucher les conducteurs du connecteur de sortie sans risque pour sa santé.

Cependant, en cas de défaut du chargeur embarqué, une tension alternative de valeur plus élevée et particulièrement dangereuse peut apparaître au moins temporairement entre les conducteurs du connecteur de sortie. Cela peut se produire par exemple en cas de défaut d'isolation galvanique d'un transformateur généralement présent dans le chargeur pour transformer le courant alternatif d'entrée à 220 V en courant alternatif à plus faible tension qui est ensuite redressé pour fournir un courant continu de recharge de la batterie d'accumulateurs. En effet, le circuit électronique de gestion de la batterie d'accumulateurs (Battery Management System - BMS) ne suffit pas pour éliminer totalement la surtension alternative temporaire pouvant se produire dans ce cas. Des fusibles peuvent alors agir, mais pas immédiatement et uniquement si le courant est fort, ce qui n'élimine pas le danger d'électrocution.

Une autre difficulté est qu'un connecteur intégrant des aimants présente le risque d'attirer des parties métalliques ferromagnétiques de façon durable. Ces parties métalliques risquent de se placer entre les deux conducteurs de sortie du connecteur, générant un court-circuit. Le circuit électronique de gestion de la batterie d'accumulateurs peut se mettre en protection, mais la batterie d'accumulateurs est alors inutilisable.

Il existe donc un besoin d'empêcher tout contact d'éléments métalliques ou de l'utilisateur avec les conducteurs du connecteur de sortie lorsque l'unité d'alimentation électrique est extraite du véhicule. On connaît du document CN 107 863 470 A une unité d'alimentation électrique selon le préambule de la revendication 1. Selon ce document, un volet d'occultation unique est sollicité en déplacement transversal vers une position d'occultation par un ressort de rappel pour occulter des conducteurs électriques de sortie. Une nervure en arc est prévue sur la face frontale du volet et forme un relief que l'utilisateur doit pousser latéralement pour amener manuellement le volet jusqu'à une position escamotée. Un bouton de verrouillage retient le volet en position escamotée, et l'utilisateur doit manœuvrer ce bouton pour permettre le retour du volet en position d'occultation. Une difficulté est la nécessité d'actions manuelles de l'utilisateur pour manoeuvrer le volet.

En outre, lors de l'étape d'engagement d'une unité d'alimentation électrique dans un compartiment de véhicule, celle-ci est généralement portée par l'utilisateur selon l'une de ses extrémités, l'autre extrémité venant s'engager dans le compartiment. Une seconde difficulté supplémentaire résulte alors du fait que, lors de son introduction, l'unité d'alimentation électrique peut présenter un mouvement d'oscillation, se présenter selon une position qui n'est généralement pas correctement alignée avec le compartiment, et s'engager selon un mouvement qui n'est pas rectiligne. Il en résulte une difficulté pour produire de façon certaine la manœuvre d'escamotage de volets d'occultation afin que les connecteurs puissent s'engager correctement l'un dans l'autre en fin d'introduction de l'unité d'alimentation électrique. Il existe également le risque que l'autre extrémité de l'unité d'alimentation électrique heurte et dégrade le connecteur du véhicule lors de cette étape d'engagement.

### EXPOSE DE L'INVENTION

Un problème proposé par la présente invention est de concevoir une unité d'alimentation électrique embarquée et amovible, dans laquelle des moyens d'occultation escamotables permettent d'empêcher de façon automatique tout contact avec les conducteurs du connecteur de sortie de l'unité d'alimentation électrique lorsque celle-ci n'est pas engagée dans le compartiment de réception du véhicule.

Simultanément, la présente invention vise à éviter que la présence de moyens d'occultation escamotables augmente de façon sensible la longueur de l'unité d'alimentation électrique, et la longueur correspondante du compartiment de réception du véhicule.

Simultanément, la présente invention vise à produire l'escamotage fiable et automatique des moyens d'occultation lors de la présentation de l'unité d'alimentation électrique dans le compartiment de réception du véhicule, même en cas d'oscillations ou de présentation non alignée de l'unité d'alimentation électrique portée par l'utilisateur.

De préférence, l'invention permet d'éviter toute dégradation du connecteur de véhicule par l'unité d'alimentation électrique lorsque celle-ci est présentée dans le compartiment du véhicule.

Ainsi, l'utilisateur doit pouvoir mettre en place l'unité d'alimentation électrique dans le compartiment de réception du véhicule sans précautions particulières pour garantir l'actionnement automatique des moyens d'occultation, pour éviter la dégradation des connecteurs, et pour assurer l'engagement correct des connecteurs l'un dans l'autre.

Pour atteindre ces objets ainsi que d'autres, selon un premier aspect, l'invention propose une unité d'alimentation électrique amovible pour véhicule selon la revendication 1.

En principe, le connecteur de sortie présente une section transversale nettement inférieure à celle de l'unité d'alimentation électrique elle-même. Il existe donc, latéralement par rapport au connecteur de sortie, une place suffisante pour loger deux volets d'occultation à l'écart du connecteur de sortie dans leur position escamotée. On profite donc, selon l'invention, de cette place latérale suffisante pour constituer les moyens d'occultation sous une forme de volets en déplacement transversal, de sorte que les moyens d'occultation n'occupent qu'un encombrement longitudinal très réduit et négligeable, compatible avec le besoin de limiter la longueur de l'unité d'alimentation électrique, et la longueur correspondante du compartiment de réception du véhicule.

L'unité d'alimentation électrique de la présente invention peut en outre comporter une ou plusieurs des caractéristiques suivantes.

Ainsi, par exemple, le déplacement du ou des volets d'occultation peut être un mouvement de rotation autour d'axes de rotation respectifs.

Selon un mode de réalisation :
- deux volets d'occultation sont montés rotatifs autour d'axes de rotation respectifs, lesdits axes de rotation étant fixes dans le corps d'unité, déportés de part et d'autre d'un plan longitudinal médian du connecteur de sortie, et agencés au voisinage d'une première extrémité respective desdits volets d'occultation,
- les cames respectives des volets d'occultation sont orientées l'une vers l'autre, disposées de part et d'autre dudit plan longitudinal médian du connecteur de sortie, entre lesdits axes de rotation, dans une rainure longitudinale de l'unité d'alimentation électrique débouchant à sa première extrémité, et conformées de façon à être repoussées à l'écart l'une de l'autre par un même organe de poussée fixe du véhicule et qui est lui-même conformé pour venir s'engager progressivement entre elles dans ladite rainure longitudinale lors de l'engagement de l'unité d'alimentation électrique dans le compartiment de réception du véhicule.

Une difficulté peut exister lorsque la tenue du ou des volets d'occultation en position d'occultation est assurée par des seuls moyens de rappel élastiques. En effet, la force de retenue des moyens de rappel élastiques est nécessairement inférieure à la force d'escamotage que doit exercer l'organe de poussée pour escamoter le ou les volets d'occultation, laquelle force d'escamotage est nécessairement limitée pour éviter de requérir un effort supplémentaire de l'utilisateur lors de l'engagement de l'unité d'alimentation électrique dans le compartiment de réception du véhicule. En outre, l'encombrement disponible ne permettrait pas une augmentation de la force des moyens de rappel élastiques.

En pratique, il apparaît que des moyens de rappel élastiques tels que des ressorts n'empêchent pas suffisamment le déplacement du ou des volets d'occultation vers leur position escamotée lorsque l'utilisateur engage un doigt de main radialement contre la ou les cames de volet, ou lorsque l'utilisateur cherche à entraîner en rotation le ou les volets d'occultation par des doigts de main en adhérence sur la face externe du ou des volets d'occultation.

Pour surmonter cette difficulté, l'unité d'alimentation électrique peut comprendre des moyens de retenue des volets d'occultation en position d'occultation, pour éviter qu'une manipulation intempestive par un utilisateur puisse amener trop aisément les volets d'occultation dans leur position escamotée.

On peut prévoir pour cela des premiers moyens de retenue, selon lesquels les volets d'occultation comprennent, sur une face intérieure, au voisinage de leur seconde extrémité opposée aux axes de rotation, des moyens d'engagement conformés pour venir en conflit avec des moyens de retenue correspondants agencés fixes dans le corps d'unité lors d'une poussée axiale exercée par un utilisateur sur une face externe desdits volets d'occultation. Lors d'un tel conflit, les moyens d'engagement et les moyens de retenue s'opposent à la rotation desdits volets d'occultation à l'écart de leur position d'occultation. De la sorte, l'utilisateur ne peut pas entraîner en rotation le ou les volets d'occultation par des doigts de main en adhérence sur la face externe du ou desdits volets d'occultation.

En alternative ou en complément, on peut prévoir pour cela des seconds moyens de retenue, selon lesquels les volets d'occultation comprennent, au voisinage de leur seconde extrémité opposée aux axes de rotation, des moyens d'attraction magnétique agencés pour produire une force de retenue s'opposant à la rotation relative desdits volets d'occultation à l'écart l'un de l'autre à partir de leur position d'occultation. De la sorte, l'utilisateur ne peut pas entraîner aisément en rotation le ou les volets d'occultation par l'introduction d'un doigt de main venant repousser la ou les cames des volets d'occultation.

L'unité d'alimentation électrique peut comprendre un dégagement, ouvert sur la première extrémité et sur la face supérieure opposée à ladite rainure longitudinale, et conformé pour autoriser la pénétration du connecteur de véhicule en saillie lors de l'engagement de l'unité d'alimentation électrique dans le compartiment de réception correspondant du véhicule .

On protège ainsi le connecteur de véhicule contre les chocs ou efforts produits par l'unité d'alimentation électrique lors de sa pénétration dans le compartiment de réception du véhicule.

L'unité d'alimentation électrique peut comprendre à sa première extrémité un ou plusieurs logements de guidage dans lesquels peuvent pénétrer des doigts de guidage faisant saillie dans le compartiment de réception correspondant du véhicule et assurant le guidage de l'unité d'alimentation électrique lors de son engagement dans le compartiment de réception correspondant du véhicule.

L'unité d'alimentation électrique peut comprendre un chargeur embarqué, ayant une sortie connectée à ladite batterie d'accumulateurs électriques, ayant une entrée conformée pour sa connexion à une source extérieure d'énergie électrique, et formant de préférence la première extrémité de ladite unité d'alimentation électrique.

Pour atteindre ces mêmes objets, selon un second aspect, l'invention propose un véhicule comprenant un compartiment de réception conformé pour recevoir et contenir une unité d'alimentation électrique telle que définie ci-dessus, le compartiment de réception ayant une longueur selon une direction d'allongement entre une première extrémité comportant un connecteur de véhicule et une seconde extrémité opposée, le compartiment de réception étant limité par deux parois latérales opposées l'une à l'autre et reliées l'une à l'autre par un fond, avec une ouverture opposée au fond pour l'introduction et le retrait de l'unité d'alimentation électrique. Le fond comporte un aileron longitudinal formant organe de poussée fixe contre lequel la ou les cames de volet viennent buter et sont repoussées pour déplacer de façon automatique le ou les volets d'occultation jusque dans leur position escamotée lors de l'introduction de l'unité d'alimentation électrique dans ledit compartiment de réception.

Le véhicule de la présente invention peut en outre comporter une ou plusieurs des caractéristiques suivantes.

Par exemple, le compartiment de réception peut comporter, à sa première extrémité, un ou plusieurs doigts de guidage en saillie conformés pour s'engager dans des logements de guidage correspondants de la première extrémité de l'unité d'alimentation électrique, pour assurer le guidage de l'unité d'alimentation électrique lors de son engagement dans le compartiment de réception.

Ou encore, le compartiment de réception peut comporter, à sa première extrémité, des doigts de protection en saillie, conformés pour s'opposer à la pénétration transversale de l'unité d'alimentation électrique dans la zone occupée par le connecteur de véhicule.

Selon un autre aspect, la présente invention propose un véhicule tel que défini ci-dessus, comprenant une unité d'alimentation électrique telle que définie ci-dessus.

Selon un autre aspect, la présente invention propose un chargeur externe, comprenant un socle ayant un logement de réception conformé pour recevoir et retenir la première extrémité d'une unité d'alimentation électrique telle que définie ci-dessus, le logement de réception ayant un fond muni d'un connecteur de chargeur conformé pour s'engager axialement de façon séparable avec le connecteur de sortie de ladite unité d'alimentation électrique et établir ainsi une connexion électrique avec ladite batterie d'accumulateurs électriques pour la recharger, le logement de réception comportant un aileron formant organe de poussée contre lequel la ou les cames de volet viennent buter et sont repoussées pour déplacer le ou les volets d'occultation jusque dans leur position escamotée lors de l'introduction de l'unité d'alimentation électrique dans ledit logement de réception.

Un tel chargeur externe est ainsi compatible avec la présence de volets d'occultation, les volets d'occultation étant automatiquement escamotés dès que l'unité d'alimentation électrique est approchée dans le logement de réception du socle, permettant simultanément l'interconnexion du connecteur de chargeur et du connecteur de sortie. L'intérêt d'un tel chargeur externe est de permettre une recharge plus rapide de l'unité d'alimentation électrique.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est une vue en perspective de dessous d'une unité d'alimentation électrique selon un mode de réalisation de la présente invention, les volets d'occultation étant en position d'occultation ;
[Fig.2] La figure 2 est une vue partielle en perspective de dessous et à plus grande échelle de l'unité d'alimentation électrique de la figure 1, les volets d'occultation étant encore en position d'occultation ;
[Fig.3] La figure 3 est une vue en bout de la première extrémité de l'unité d'alimentation électrique de la figure 1, les volets d'occultation étant encore en position d'occultation ;
[Fig.4] La figure 4 est une vue partielle de dessous montrant la zone de première extrémité de l'unité d'alimentation électrique de la figure 1 ;
[Fig.5] La figure 5 est une vue en perspective de dessus de l'unité d'alimentation électrique selon le mode de réalisation de la figure 1, les volets d'occultation étant en position escamotée ;
[Fig.6] La figure 6 est une vue partielle en perspective et en coupe d'un cadre de vélo comportant un compartiment de réception selon un mode de réalisation de la présente invention ;
[Fig.7] La figure 7 est une vue partielle en perspective de la zone de première extrémité du compartiment de réception selon la figure 6, en cours d'introduction d'une unité d'alimentation électrique de la figure 1 ;
[Fig.8] La figure 8 est une vue partielle, en perspective selon un autre angle, de la zone de première extrémité du compartiment de réception selon la figure 6, en cours d'introduction d'une unité d'alimentation électrique de la figure 1;
[Fig.9] La figure 9 est une vue en coupe transversale du cadre de vélo dans la zone de première extrémité du compartiment de réception ;
[Fig.10] La figure 10 est une vue de côté illustrant l'unité d'alimentation électrique en cours d'introduction dans un cadre de vélo lui-même illustré en coupe longitudinale, l'unité d'alimentation électrique étant sensiblement verticale et en conflit avec les doigts supérieurs de protection ;
[Fig.11] La figure 11 est une vue en perspective de dessus illustrant l'unité d'alimentation électrique en cours d'introduction dans un cadre de vélo lui-même illustré en coupe longitudinale, le connecteur de véhicule étant engagé dans le dégagement de l'unité d'alimentation électrique ;
[Fig.12] La figure 12 est une autre vue en perspective de côté illustrant l'unité d'alimentation électrique en cours d'introduction dans un cadre de vélo lui-même illustré en coupe longitudinale ;
[Fig.13] La figure 13 est une vue en perspective de côté illustrant l'unité d'alimentation électrique entièrement logée dans le cadre de vélo lui-même illustré en coupe longitudinale ;
[Fig.14] La figure 14 est une vue de dessous de la première extrémité de l'unité d'alimentation électrique, illustrant les forces exercées par les doigts de main pour tenter d'ouvrir un volet d'occultation par un appui sur la face externe dudit volet d'occultation, et illustrant un mode de réalisation des premiers moyens de retenue des volets d'occultation en position d'occultation ;
[Fig.15] La figure 15 est une vue de face de la première extrémité de l'unité d'alimentation électrique, illustrant la force exercée par un doigt de main pour tenter d'ouvrir un volet d'occultation par un appui sur la face externe dudit volet d'occultation, et illustrant un mode de réalisation des premiers moyens de retenue des volets d'occultation en position d'occultation ;
[Fig.16] La figure 16 est une vue en perspective d'un chargeur externe selon un mode de réalisation de l'invention ;
[Fig.17] La figure 17 est une vue en perspective du chargeur externe de la figure 16 recevant une unité d'alimentation électrique selon l'invention ; et
[Fig.18] La figure 18 est une vue de côté d'une bicyclette dans laquelle est incorporée l'unité d'alimentation électrique.

### DESCRIPTION DES MODES DE REALISATION PREFERES

Lorsque des références numériques identiques sont utilisées dans plusieurs modes de réalisation de l'invention, ces références numériques désignent des éléments identiques ou similaires dans chacun des modes de réalisation.

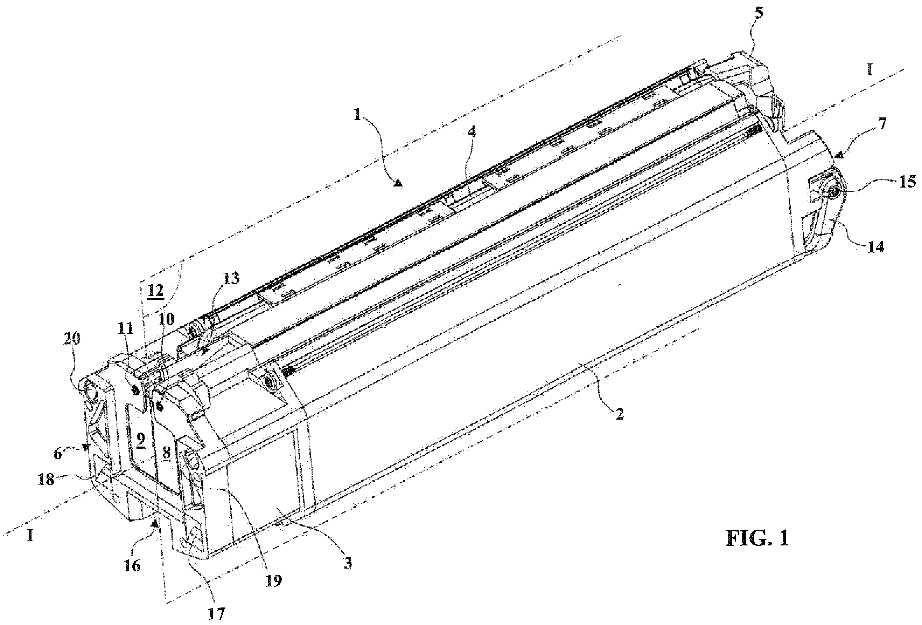

On considère tout d'abord l'unité d'alimentation électrique 1 telle qu'illustrée de façon globale sur la figure 1, vue en perspective de dessous vers sa face frontale de première extrémité. Il s'agit d'une unité d'alimentation électrique amovible, conformée pour être embarquée sur un véhicule, en particulier mais de façon non limitative sur un véhicule léger à assistance électrique tel qu'une bicyclette, une trottinette, un tricycle.

Cette unité d'alimentation électrique 1 comprend un corps d'unité comportant une batterie d'accumulateurs électriques 2 et un câble de connexion électrique 4 avec une fiche 5.

Cette unité d'alimentation électrique 1 est de forme allongée entre une première extrémité 6 et une seconde extrémité 7 selon une direction d'allongement I-I.

Dans le mode de réalisation illustré sur les figures, le corps d'unité de cette unité d'alimentation électrique 1 comporte également un chargeur 3 embarqué. Le chargeur 3 embarqué forme avantageusement ladite première extrémité 6 de l'unité d'alimentation électrique 1, comporte une sortie connectée à ladite batterie d'accumulateurs électriques 2, et comporte une entrée comprenant le câble de connexion électrique 4 et la fiche 5 pour sa connexion à une source extérieure d'énergie électrique. Le chargeur 3 embarqué est structuré de façon connue pour transformer un courant électrique alternatif, fourni au chargeur 3 par une source extérieure d'énergie électrique, en un courant électrique continu, fourni par le chargeur 3 embarqué à la batterie d'accumulateurs électriques 2, et approprié pour la recharge de cette dernière.

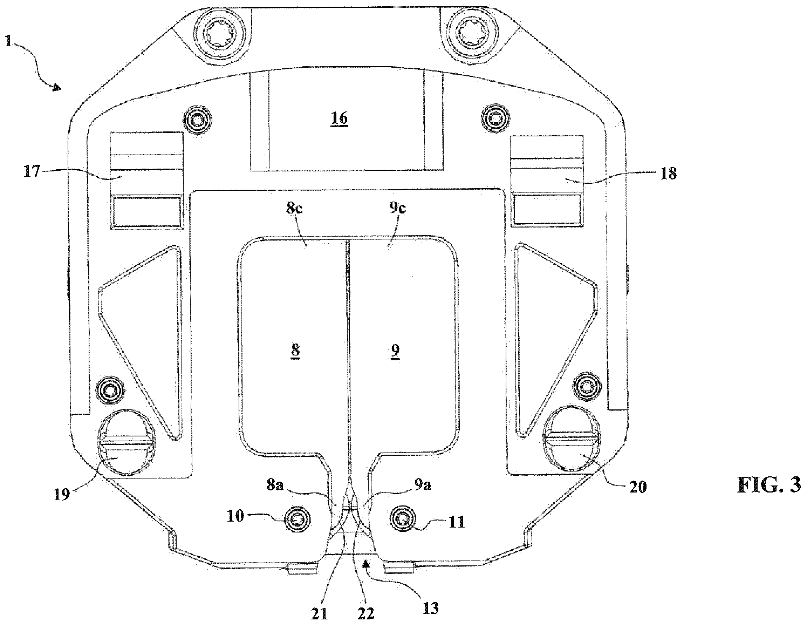

Sur la figure 1, on distingue également, à la première extrémité 6 de l'unité d'alimentation électrique 1, deux volets d'occultation 8 et 9, qui sont en position d'occultation pour interdire l'accès à un connecteur de sortie qui sera visible sur d'autres figures. Les volets d'occultation 8 et 9 sont montés rotatifs dans le corps d'unité autour d'axes de rotation respectifs 10 et 11 longitudinaux. Les axes de rotation respectifs 10 et 11 sont fixes dans le corps d'unité, déportés de part et d'autre d'un plan longitudinal médian 12 contenant la direction d'allongement I-I, et agencés au voisinage d'une première extrémité respective 8a ou 9a (figure 3) des volets d'occultation 8 et 9 . Les volets d'occultation 8 et 9 sont ainsi déplaçables transversalement par rotation autour de leurs axes de rotation respectifs 10 et 11, et sont sollicités par des ressorts de rappel (non représentés) qui tendent à les ramener en permanence jusque dans leurs positions d'occultation. Une rainure longitudinale 13 occupe une partie de la face inférieure de l'unité d'alimentation électrique 1, et débouche à la première extrémité 6 entre les axes de rotation 10 et 11.

A la première extrémité 6 de l'unité d'alimentation électrique 1, on distingue en outre un dégagement 16, ouvert sur la première extrémité 6 et sur la face supérieure de l'unité d'alimentation électrique 1 opposée à la rainure longitudinale 13. On distingue également, sur la face frontale de première extrémité 6, deux logements supérieurs de guidage 17 et 18 au voisinage des coins supérieurs de la face, et deux logements inférieurs de guidage 19 et 20 au voisinage des coins inférieurs de la face.

À la seconde extrémité 7 de l'unité d'alimentation électrique 1, il est prévu une poignée de transport 14, escamotable par rotation autour d'un axe transversal 15, et illustrée en position escamotée contre la face frontale de seconde extrémité 7 sur la figure 1.

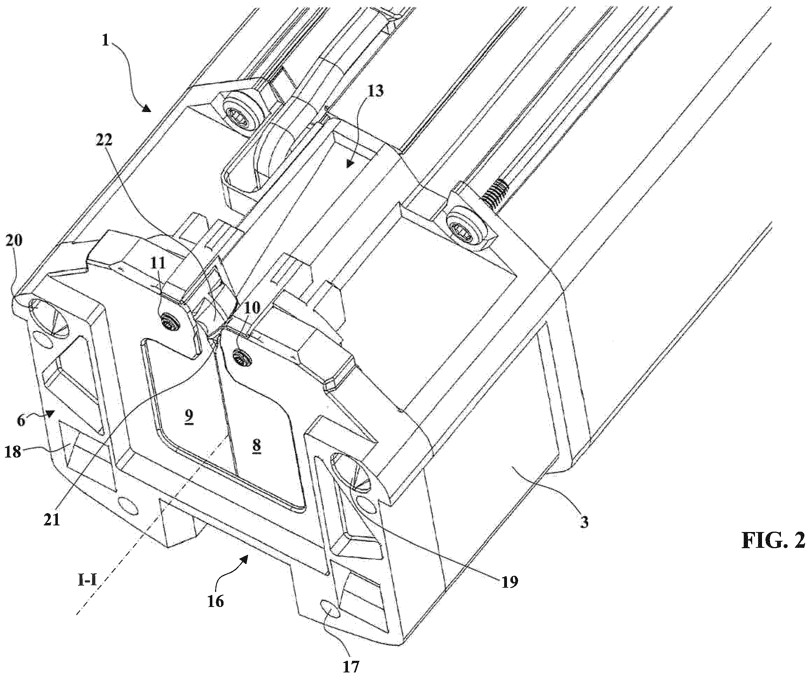

Sur la figure 2, à plus grande échelle, on distingue plus en détail la structure des éléments présents à la première extrémité 6 de l'unité d'alimentation électrique 1. On retrouve ainsi les mêmes éléments que sur la figure 1, repérés par les mêmes références numériques. On distingue en outre que chacun des volets d'occultation 8 et 9 comporte, au voisinage de son axe de rotation respectif 10 ou 11, une came de volet 21 ou 22. Les cames de volet 21 et 22 sont orientées l'une vers l'autre, disposées de part et d'autre dudit plan longitudinal médian 12 (figure 1), entre lesdits axes de rotation 10 et 11, dans la rainure longitudinale 13 de l'unité d'alimentation électrique 1.

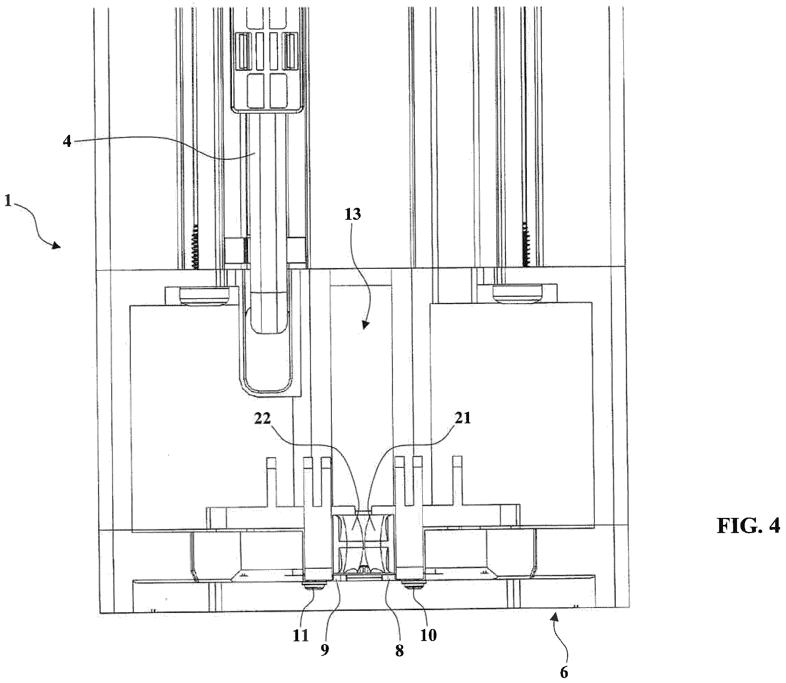

Sur les figures 3 et 4, respectivement en vue en bout et en vue de dessous, on distingue à nouveau les cames de volet 21 et 22, les volets 8 et 9 étant en position d'occultation.

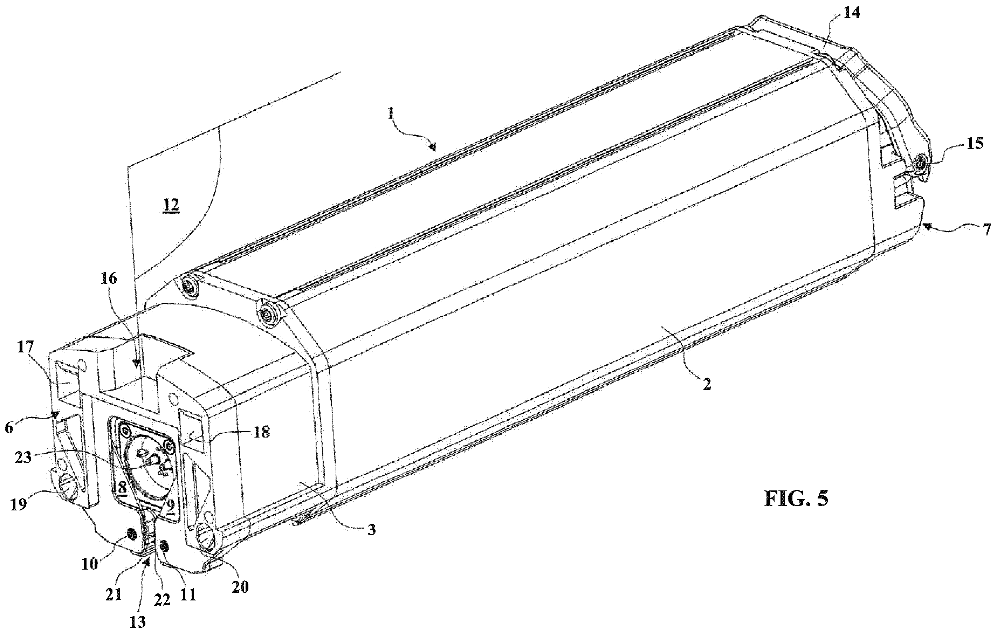

La figure 5 illustre à nouveau l'unité d'alimentation électrique 1, vue en perspective de dessus vers sa face frontale de première extrémité 6, mais cette fois les volets d'occultation 8 et 9 sont en position escamotée, pivotés à l'écart l'un de l'autre de part et d'autre du plan longitudinal médian 12. Ainsi, sur cette figure, on distingue le connecteur de sortie 23 de l'unité d'alimentation électrique 1, qui était préalablement occulté par les volets d'occultation 8 et 9 sur les figures 1 à 4.

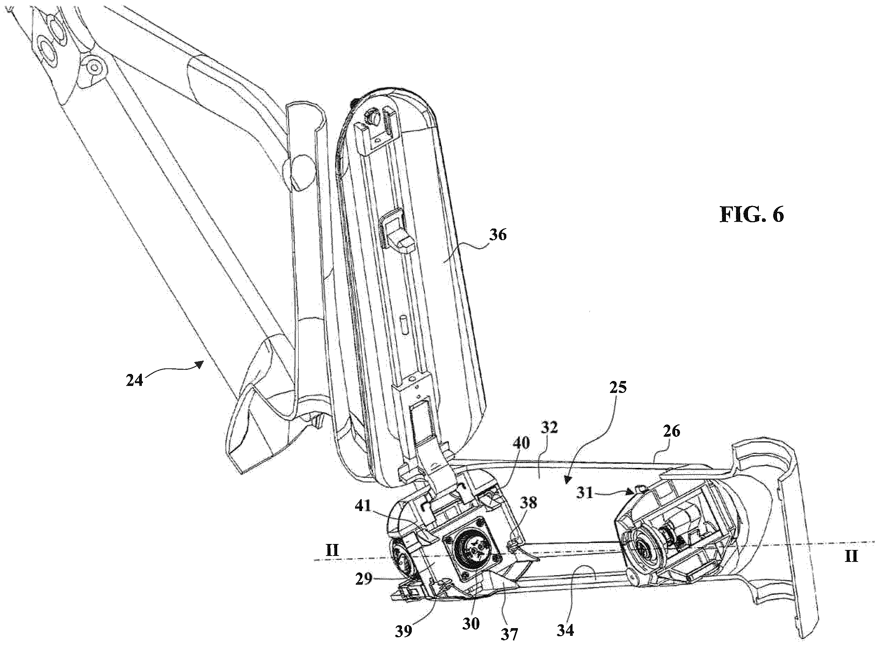

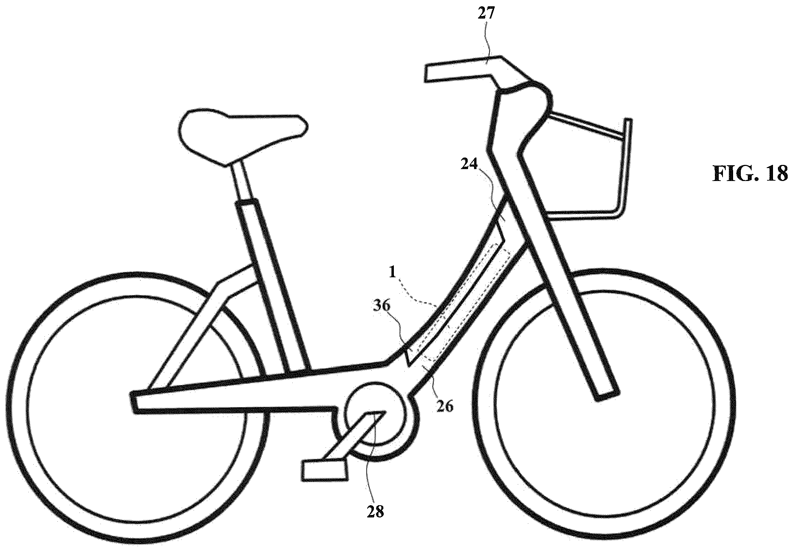

On considère maintenant la figure 6, illustrant un mode de réalisation de véhicule destiné à recevoir l'unité d'alimentation électrique 1. Dans ce mode de réalisation, il s'agit d'un vélo, dont le cadre 24 est illustré en perspective et en coupe longitudinale sur la figure. Le cadre de vélo 24 comprend un compartiment de réception 25 dans lequel l'unité d'alimentation électrique 1 peut s'engager à faible jeu. En pratique, le compartiment de réception 25 est ménagé dans une poutre oblique 26 du cadre de vélo 24 entre le guidon 27 et le pédalier 28 (figure 18). On notera toutefois que l'invention s'applique à tout véhicule muni d'un tel compartiment de réception 25 dans lequel l'unité d'alimentation électrique 1 peut s'engager à faible jeu.

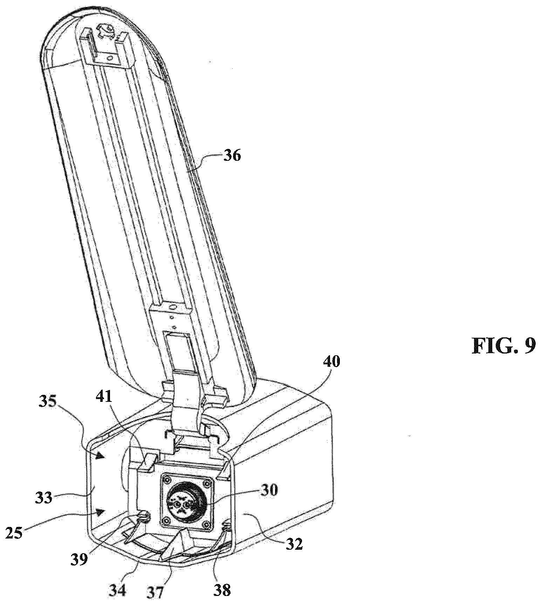

Le compartiment de réception 25 est allongé selon une direction d'allongement II-II entre une première extrémité 29 comportant un connecteur de véhicule 30 et une seconde extrémité 31 opposée. Comme on le voit mieux en coupe transversale sur la figure 9, le compartiment de réception 25 est limité par deux parois latérales 32 et 33 opposées l'une à l'autre et reliées l'une à l'autre par un fond 34, avec une ouverture supérieure 35 opposée au fond 34 et obturable par un couvercle 36 qui, en position ouverte telle qu'illustrée, autorise l'insertion et l'extraction de l'unité d'alimentation électrique 1.

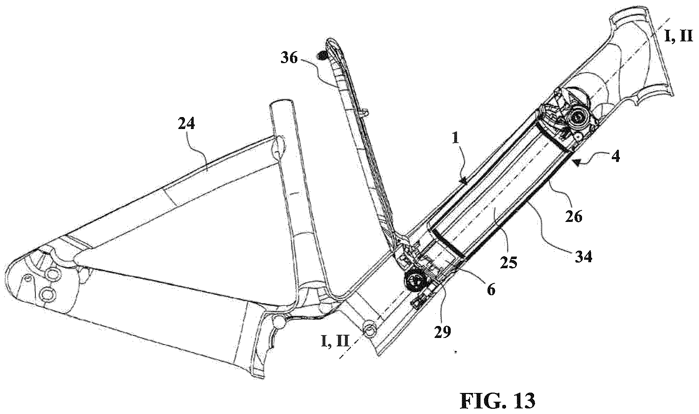

Comme on le voit sur la figure 13, lorsqu'elle est logée dans le compartiment de réception 25, l'unité d'alimentation électrique 1 est disposée avec sa direction d'allongement I-I sensiblement alignée avec la poutre oblique 26, sa première extrémité 6 est disposée en partie basse à la première extrémité 29 du compartiment de réception 25, et le câble de connexion électrique 4 est situé en dessous de la batterie d'accumulateurs électriques 2, face au fond 34 du compartiment de réception 25.

À la première extrémité 29 du compartiment de réception 25, le connecteur de véhicule 30 est en saillie (figures 6, 7, 9), et est conformé pour coopérer avec le connecteur de sortie 23 de l'unité d'alimentation électrique 1 lorsque celle-ci est engagée dans le compartiment de réception 25. Dans la zone de la première extrémité 29 du compartiment de réception 25, le fond 34 comporte un aileron longitudinal 37 médian fixe (figures 6 à 9), ayant un tronçon formant une arête de hauteur allant en décroissant en s'éloignant de la première extrémité 29, et formant organe de poussée fixe contre lequel les cames de volet 21 et 22 viennent buter et sont repoussées pour forcer le pivotement des volets d'occultation 8 et 9 à l'encontre de leur ressort de rappel jusqu'à leur position escamotée lors de l'introduction de l'unité d'alimentation électrique 1 dans le compartiment de réception 25.

Autour du connecteur de véhicule 30, on distingue en outre deux doigts inférieurs de guidage 38 et 39 et deux doigts supérieurs de protection 40 et 41, faisant saillie longitudinalement depuis la face frontale de la première extrémité 29 du compartiment de réception 25. Les doigts supérieurs de protection 40 et 41 sont disposés et conformés pour s'engager dans les logements supérieurs de guidage 17 et 18 respectifs de l'unité d'alimentation électrique 1, tandis que les doigts inférieurs de guidage 38 et 39 sont disposés et conformés pour s'engager dans les logements inférieurs de guidage 19 et 20 respectifs, au cours de l'introduction de l'unité d'alimentation électrique 1 dans le compartiment de réception 25, afin de guider le mouvement de l'unité d'alimentation électrique 1 pour présenter de façon fiable le connecteur de sortie 23 en ligne avec le connecteur de véhicule 30 afin d'assurer l'interconnexion.

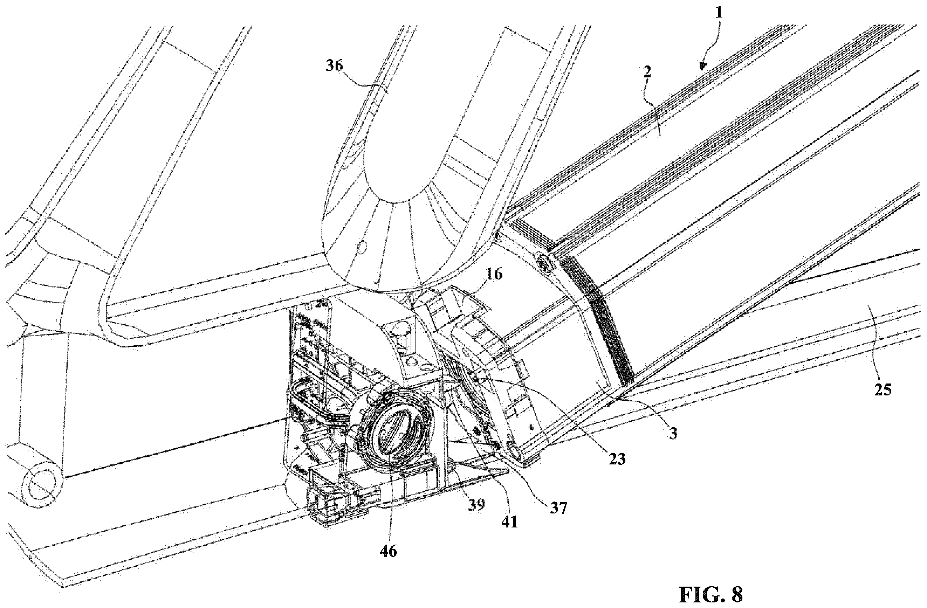

Comme on le voit par exemple sur la figure 8, pendant l'engagement de l'unité d'alimentation électrique 1, l'aileron 37 pénètre progressivement dans la rainure longitudinale 13, entre les cames de volet 21 et 22 en les écartant l'une de l'autre, forçant le pivotement automatique des volets d'occultation 8 et 9. Ainsi, dans la position intermédiaire illustrée sur la figure 8, les volets d'occultation 8 et 9 sont en position escamotée, laissant apparaître le connecteur de sortie 23.

Pendant son engagement dans le compartiment de réception 25, l'unité d'alimentation électrique 1 est en outre guidée par la forme particulière du fond 34, présentant une section transversale trapézoïdale illustrée sur la figure 9, à laquelle correspond la surface inférieure trapézoïdale de l'unité d'alimentation électrique 1, produisant le rappel de l'unité d'alimentation électrique 1 en alignement avec le compartiment de réception 25.

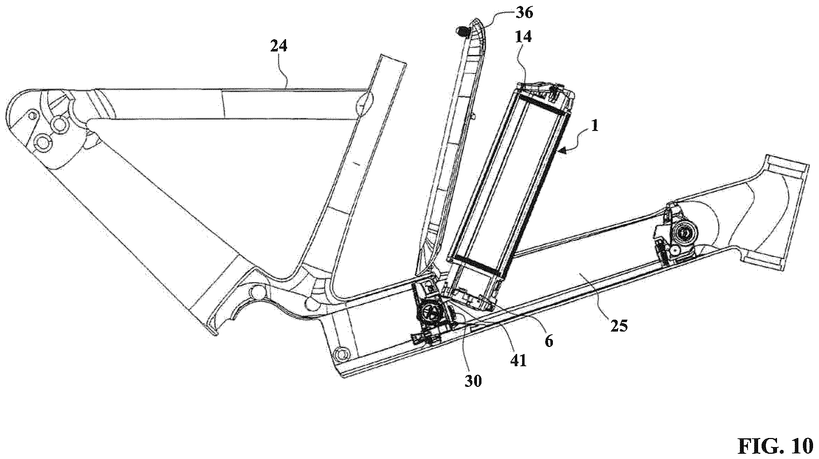

On considère maintenant les figures 10 à 13, illustrant de façon plus globale le mouvement d'insertion de l'unité d'alimentation électrique 1 telle que décrite précédemment dans le compartiment de réception 25 prévu à cet effet dans un cadre de vélo 24.

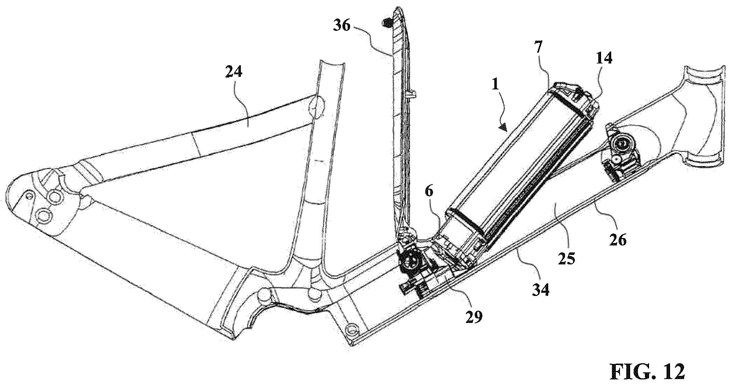

Initialement, l'utilisateur porte l'unité d'alimentation électrique 1 par sa poignée 14, de sorte que l'unité d'alimentation électrique 1 est orientée verticalement (ou en oblique s'il la tient avec les deux mains) avec sa première extrémité 6 vers le bas. L'utilisateur engage la première extrémité 6 dans le compartiment de réception 25. La figure 12 illustre l'unité d'alimentation électrique 1 en cours d'introduction normale dans le compartiment de réception 25, sa première extrémité 6 étant engagée dans le compartiment de réception 25 au voisinage mais un peu à l'écart de la première extrémité 29 du compartiment de réception 25, et sa seconde extrémité 7 étant encore à l'extérieur du compartiment de réception 25, soutenue par l'utilisateur qui tient la poignée 14. La figure 13 illustre l'unité d'alimentation électrique 1 entièrement introduite dans le compartiment de réception 25, avant fermeture du couvercle 36.

Dans l'hypothèse illustrée sur la figure 10, l'utilisateur approche l'unité d'alimentation électrique 1 trop directement au voisinage de la première extrémité 29 du compartiment de réception 25, dans la zone occupée par le connecteur de véhicule 30. La première extrémité 6 de l'unité d'alimentation électrique 1 vient alors buter contre les doigts supérieurs de protection 40 et 41, évitant ainsi de venir toucher et dégrader le connecteur de véhicule 30. La première extrémité 6 de l'unité d'alimentation électrique 1 est ensuite légèrement éloignée par l'utilisateur à l'écart du connecteur de véhicule 30, pour s'engager dans le compartiment de réception 25 sans toucher le connecteur de véhicule 30.

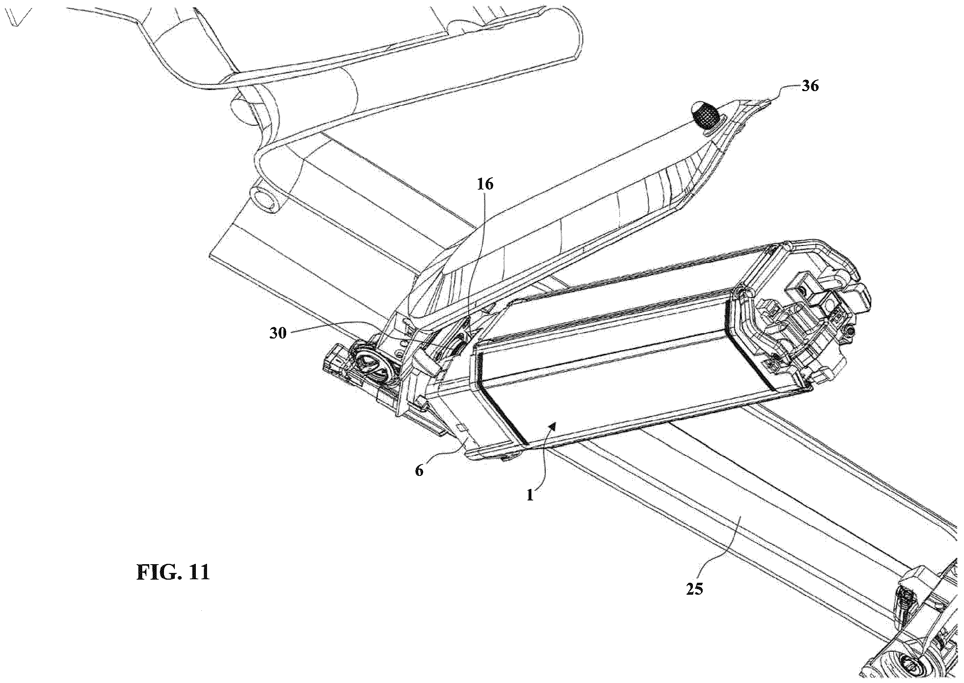

Ensuite, l'utilisateur peut incliner l'unité d'alimentation électrique 1 comme illustré sur la figure 11, tout en engageant progressivement la première extrémité 6 en direction du connecteur de véhicule 30. Pendant cet engagement progressif, le connecteur de véhicule 30 vient s'engager dans le dégagement 16, évitant ainsi d'être touché et dégradé par l'unité d'alimentation électrique 1.

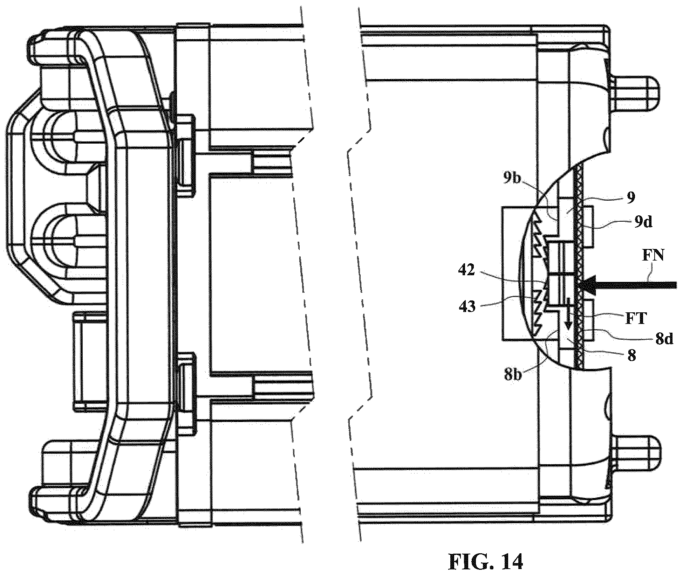

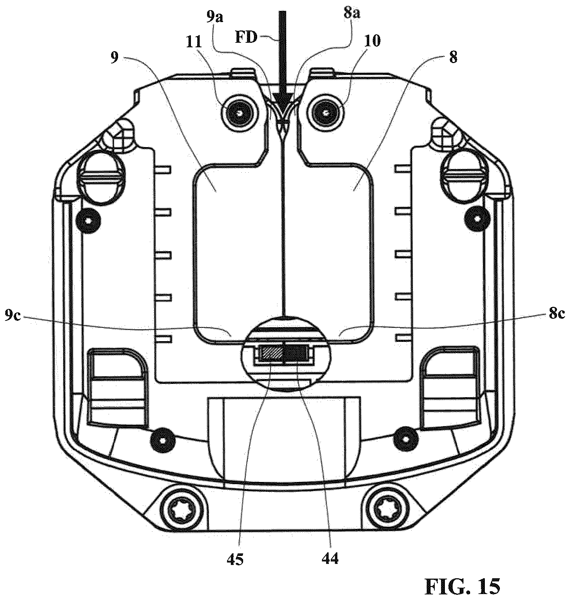

On considère maintenant les figures 14 et 15, qui illustrent respectivement des premiers moyens de retenue et des seconds moyens de retenue permettant d'augmenter sensiblement la force que doit appliquer un doigt de l'utilisateur pour déplacer le ou les volets d'occultation à l'écart de leur position d'occultation.

Sur la figure 14, les premiers moyens de retenue comprennent, sur une face intérieure respective 8b, 9b des volets d'occultation 8, 9, au voisinage de leur seconde extrémité 8c, 9c (figure 3) opposée aux axes de rotation 10, 11, des moyens d'engagement 42 conformés pour coopérer avec des moyens de retenue 43 correspondants agencés dans le corps d'unité d'alimentation électrique 1 pour s'opposer à la rotation desdits volets d'occultation 8, 9 à l'écart de leur position d'occultation lors d'une poussée axiale FN exercée par un utilisateur sur une face externe 8d, 9d desdits volets d'occultation 8, 9. En pratique les moyens d'engagement 42 et les moyens de retenue 43 peuvent être des dentures se faisant face et s'engageant l'une dans l'autre lorsque la poussée axiale FN déforme élastiquement le volet d'occultation 8 ou 9 correspondant.

Dans une réalisation pratique, en l'absence des moyens d'engagement 42 et des moyens de retenue 43, une poussée axiale FN de 0,6 N était suffisante pour assurer une adhérence d'un doigt sur la face externe d'un volet d'occultation permettant l'entraînement dudit volet d'occultation par une poussée transversale FT de 0,4 N ; par contre, en présence des moyens d'engagement 42 et des moyens de retenue 43, la même poussée axiale FN de 0,6 N a provoqué l'engagement des moyens d'engagement 42 et des moyens de retenue 43 l'un dans l'autre, interdisant l'entraînement dudit volet d'occultation par une poussée transversale FT.

Sur la figure 15, les seconds moyens de retenue comprennent, au voisinage de la seconde extrémité 8c, 9c des volets d'occultation 8, 9 opposée aux axes de rotation 10, 11, des moyens d'attraction magnétique 44 et 45 agencés pour produire une force de retenue s'opposant à la rotation relative desdits volets d'occultation 8, 9 à l'écart l'un de l'autre à partir de leur position d'occultation. En pratique, les moyens d'attraction magnétique 44 peuvent être un aimant néodyme, et les moyens d'attraction magnétique 45 peuvent être un axe en acier.

Dans une réalisation pratique, en l'absence des moyens d'attraction magnétique 44 et 45, une poussée FD de 12 N sur les cames était suffisante pour assurer l'entraînement en rotation du ou des volets d'occultation 8, 9 ; par contre, en présence des moyens d'attraction magnétique 44 et 45, la poussée FD nécessaire pour assurer l'entraînement en rotation du ou des volets d'occultation 8, 9 a été supérieure à 45 N.

Dans le mode de réalisation illustré sur les figures, l'unité d'alimentation électrique 1 comporte un chargeur 3 embarqué, permettant par son câble de connexion électrique 4 une connexion à une source extérieure d'énergie électrique, lorsque l'unité d'alimentation électrique 1 est déposée à l'extérieur du véhicule.

En alternative, selon la présente invention, il est possible de prévoir une unité d'alimentation électrique 1 dépourvue de chargeur 3 embarqué.

Dans les deux cas, c'est-à-dire en présence ou en l'absence d'un chargeur 3 embarqué, la recharge de la batterie d'accumulateurs 2 peut se faire par une connexion à un chargeur externe 47, pour une recharge plus rapide.

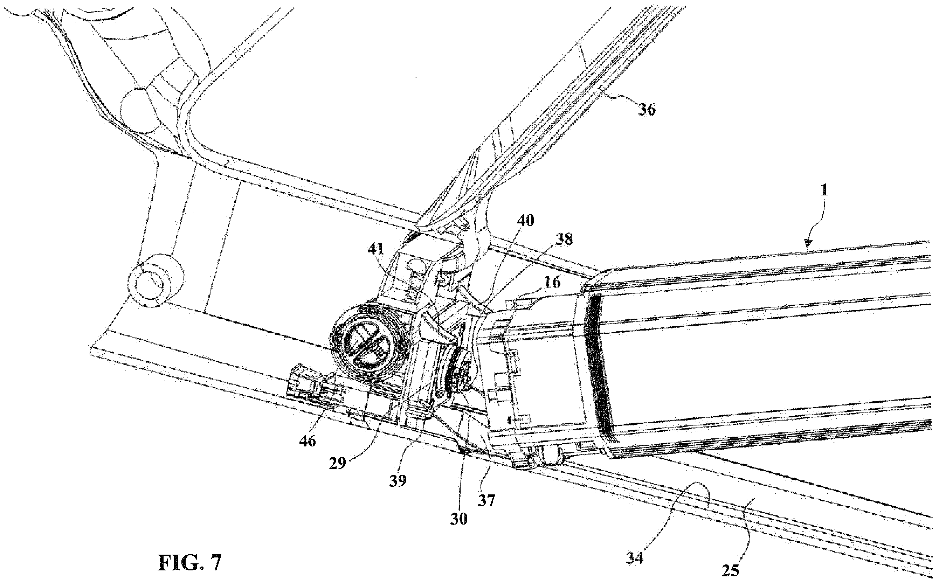

Selon une première possibilité de recharge rapide, l'unité d'alimentation électrique 1 reste logée dans le véhicule. Le chargeur externe 47 est alors connecté sur une prise auxiliaire 46 (figures 7 et 8) du véhicule, elle-même raccordée au connecteur de véhicule 30 pour assurer la continuité de la connexion électrique jusqu'à la batterie d'accumulateurs 2.

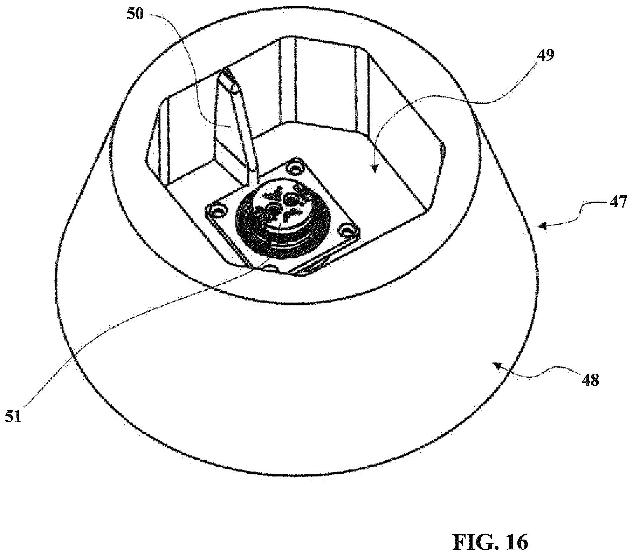

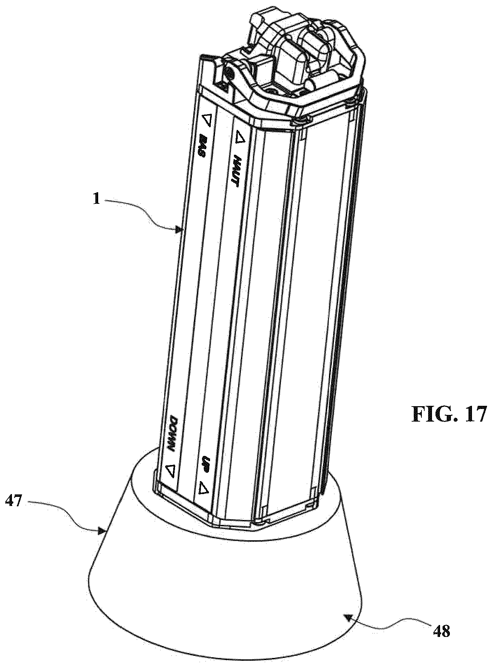

Selon une seconde possibilité de recharge rapide, l'unité d'alimentation électrique 1 est déplacée à l'extérieur du véhicule. Le chargeur externe 47, par exemple tel qu'illustré sur les figures 16 et 17, comprend alors un socle 48 conformé pour remplir les trois fonctions suivantes :
- recevoir, dans un logement 49 prévu à cet effet, la première extrémité 6 de l'unité d'alimentation électrique 1 et maintenir cette dernière en position verticale, assurant sa stabilité et réduisant l'occupation de surface au sol,
- repousser les volets d'occultation 8 et 9 en position escamotée grâce à un aileron d'ouverture de volets 50 similaire à l'aileron 37 du compartiment de réception 25,
- assurer la connexion électrique entre un connecteur de chargeur 51 et le connecteur de sortie 23 de l'unité d'alimentation électrique 1.

La présente invention n'est pas limitée aux modes de réalisation qui ont été explicitement décrits, mais elle en inclut les diverses variantes et généralisations contenues dans le domaine des revendications ci-après.

## Revendications

1. Unité d'alimentation électrique (1) amovible pour véhicule, ayant un corps d'unité présentant une longueur entre une première extrémité (6) et une seconde extrémité (7) selon une direction d'allongement (I-I), conformée pour être introduite dans un compartiment de réception (25) correspondant du véhicule, et comprenant :
- une batterie d'accumulateurs électriques (2),
- un connecteur de sortie (23), disposé en orientation frontale à la première extrémité (6) du corps d'unité de l'unité d'alimentation électrique (1), ayant des conducteurs électriques connectés à ladite batterie d'accumulateurs électriques (2), et conformé pour s'engager axialement de façon séparable avec un connecteur de véhicule (30) et établir ainsi une connexion électrique avec ladite batterie d'accumulateurs électriques (2) pour alimenter un équipement du véhicule,
- un premier volet d'occultation, déplaçable transversalement dans le corps d'unité de l'unité d'alimentation électrique (1) entre une position d'occultation dans laquelle il recouvre le connecteur de sortie (23) et une position escamotée dans laquelle il libère l'accès au connecteur de sortie (23),
- un premier moyen de rappel sollicitant ledit premier volet d'occultation vers sa position d'occultation,
**caractérisée en ce qu'**elle comprend :
- un deuxième volet d'occultation, lesdits volets d'occultation (8, 9), étant déplaçables transversalement dans le corps d'unité de l'unité d'alimentation électrique (1) entre une position d'occultation dans laquelle ils recouvrent chacun une partie du connecteur de sortie (23) et une position escamotée dans laquelle ils libèrent l'accès au connecteur de sortie (23),
- un deuxième moyen de rappel, lesdits moyens de rappel sollicitant les volets d'occultation (8, 9) vers ladite position d'occultation,
- une came de volet (21, 22) respective, prévue sur chacun desdits volets d'occultation (8, 9), et conformée pour être repoussée par un ou plusieurs organes de poussée (37) fixes prévus dans le compartiment de réception (25) du véhicule de façon à déplacer lesdits volets d'occultation (8, 9) transversalement à l'écart l'un de l'autre à l'encontre desdits moyens de rappel jusqu'à ladite position escamotée lors de l'engagement de l'unité d'alimentation électrique (1) en direction du connecteur de véhicule (30) dans le compartiment de réception (25) du véhicule.

2. Unité d'alimentation électrique selon la revendication 1, **caractérisée en ce que** :
- les volets d'occultation (8, 9) sont montés rotatifs autour d'axes de rotation respectifs (10, 11), lesdits axes de rotation (10, 11) étant fixes dans le corps d'unité de l'unité d'alimentation électrique (1), déportés de part et d'autre d'un plan longitudinal médian (12) du connecteur de sortie (23), et agencés au voisinage d'une première extrémité respective desdits volets d'occultation (8, 9),
- les cames respectives (21, 22) des volets d'occultation (8, 9) sont orientées l'une vers l'autre, disposées de part et d'autre dudit plan longitudinal médian (12) du connecteur de sortie (23), entre lesdits axes de rotation (10, 11), dans une rainure longitudinale (13) de l'unité d'alimentation électrique (1) débouchant à sa première extrémité (6), et conformées de façon à être repoussées à l'écart l'une de l'autre par un même organe de poussée (37) fixe qui est lui-même conformé pour venir s'engager progressivement entre elles dans ladite rainure longitudinale (13) lors de l'engagement de l'unité d'alimentation électrique (1) en direction du connecteur de véhicule (30) dans le compartiment de réception (25) du véhicule.

3. Unité d'alimentation électrique (1) selon la revendication 2, **caractérisée en ce que** les volets d'occultation (8, 9) comprennent, sur une face intérieure respective (8b, 9b), au voisinage de leur seconde extrémité respective (8c, 9c) opposée aux axes de rotation respectifs (10, 11), des moyens d'engagement (42) conformés pour coopérer avec des moyens de retenue (43) correspondants agencés dans le corps d'unité de l'unité d'alimentation électrique (1) pour s'opposer à la rotation desdits volets d'occultation (8, 9) à l'écart de leur position d'occultation lors d'une poussée axiale (FN) exercée par un utilisateur sur une face externe respective (8d, 9d) desdits volets d'occultation (8, 9).

4. Unité d'alimentation électrique (1) selon l'une des revendications 2 ou 3, **caractérisée en ce que** les volets d'occultation (8, 9) comprennent, au voisinage de leur seconde extrémité respective (8c, 9c) opposée aux axes de rotation respectifs (10, 11), des moyens d'attraction magnétique (44, 45) agencés pour produire une force de retenue s'opposant à la rotation relative desdits volets d'occultation (8, 9) à l'écart l'un de l'autre à partir de leur position d'occultation.

5. Unité d'alimentation électrique (1) selon l'une quelconque des revendications 2 à 4, **caractérisée en ce qu'**elle comprend un dégagement (16), ouvert sur la première extrémité (6) et sur la face supérieure de l'unité d'alimentation électrique opposée à ladite rainure longitudinale (13), et conformé pour autoriser la pénétration du connecteur de véhicule (30) en saillie lors de l'engagement de l'unité d'alimentation électrique (1) dans le compartiment de réception (25) correspondant du véhicule.

6. Unité d'alimentation électrique (1) selon l'une quelconque des revendications 1 à 5, **caractérisée en ce qu'**elle comprend à sa première extrémité (6) un ou plusieurs logements de guidage (19, 20) dans lesquels peuvent pénétrer des doigts de guidage ( 38, 39) faisant saillie dans le compartiment de réception (25) correspondant du véhicule et assurant le guidage de l'unité d'alimentation électrique (1) lors de son engagement dans le compartiment de réception (25) correspondant du véhicule.

7. Unité d'alimentation électrique (1) selon l'une quelconque des revendications 1 à 6, **caractérisée en ce qu'**elle comprend un chargeur (3) embarqué, ayant une sortie connectée à ladite batterie d'accumulateurs électriques (2), ayant une entrée conformée pour sa connexion à une source extérieure d'énergie électrique, et formant la première extrémité (6) de l'unité d'alimentation électrique (1).

8. Véhicule comprenant un compartiment de réception (25) conformé pour recevoir et contenir une unité d'alimentation électrique (1) selon l'une quelconque des revendications 1 à 7, le compartiment de réception (25) ayant une longueur selon une direction d'allongement (II-II) entre une première extrémité (29) comportant un connecteur de véhicule (30) et une seconde extrémité (31) opposée, le compartiment de réception (25) étant limité par deux parois latérales (32, 33) opposées l'une à l'autre et reliées l'une à l'autre par un fond (34), avec une ouverture (35) opposée au fond (34) pour l'introduction et le retrait de l'unité d'alimentation électrique (1), le fond (34) comportant un aileron (37) longitudinal formant organe de poussée fixe contre lequel lesdites cames de volet (21, 22) viennent buter et sont repoussées pour déplacer les volets d'occultation (8, 9) jusque dans leur position escamotée lors de l'introduction de l'unité d'alimentation électrique (1) en direction du connecteur de véhicule (30) dans ledit compartiment de réception (25).

9. Véhicule selon la revendication 8, **caractérisé en ce que** le compartiment de réception (25) comporte, à sa première extrémité (29), un ou plusieurs doigts de guidage (38, 39) en saillie conformés pour s'engager dans des logements de guidage (19, 20) correspondants de la première extrémité (6) de l'unité d'alimentation électrique (1), pour assurer le guidage de l'unité d'alimentation électrique (1) lors de son engagement dans le compartiment de réception (25).

10. Véhicule selon l'une des revendications 8 ou 9, **caractérisé en ce que** le compartiment de réception (25) comporte, à sa première extrémité (29), des doigts de protection (40, 41) en saillie, conformés pour s'opposer à la pénétration transversale de l'unité d'alimentation électrique (1) dans la zone occupée par le connecteur de véhicule (30).

11. Véhicule selon l'une quelconque des revendications 8 à 10, comprenant une unité d'alimentation électrique (1) selon l'une quelconque des revendications 1 à 7.

12. Chargeur externe (47), comprenant un socle (48) ayant un logement de réception (49) conformé pour recevoir et retenir la première extrémité (6) d'une unité d'alimentation électrique (1) selon l'une quelconque des revendications 1 à 7, le logement de réception (49) ayant un fond muni d'un connecteur de chargeur (51) conformé pour s'engager axialement de façon séparable avec le connecteur de sortie (23) de ladite unité d'alimentation électrique (1) et établir ainsi une connexion électrique avec ladite batterie d'accumulateurs électriques (2) pour la recharger, le logement de réception (49) comportant un aileron (50) formant organe de poussée fixe contre lequel lesdites cames de volet (21, 22) viennent buter et sont repoussées pour déplacer les volets d'occultation (8, 9) jusque dans leur position escamotée lors de l'introduction de l'unité d'alimentation électrique (1) dans ledit logement de réception (49).

## Patentansprüche

1. Abnehmbare Stromversorgungseinheit (1) für Fahrzeuge, mit einem Gerätekörper, der eine Länge zwischen einem ersten Ende (6) und einem zweiten Ende (7) in einer Erstreckungsrichtung (I-I) aufweist, die ausgestaltet ist, um in ein dem Fahrzeug entsprechendes Aufnahmefach (25) eingeführt zu werden, und umfassend:
- eine elektrische Akkumulatorbatterie (2),
- einen Ausgangssteckverbinder (23), der in frontaler Orientierung am ersten Ende (6) des Gerätekörpers der Stromversorgungseinheit (1) angeordnet ist, der elektrische Leiter, die an die elektrische Akkumulatorbatterie (2) angeschlossen sind, aufweist und dazu ausgestaltet ist, axial trennbar mit einem Fahrzeugsteckverbinder (30) in Eingriff zu kommen und somit eine elektrische Verbindung mit der elektrische Akkumulatorbatterie (2) herzustellen, um eine Einrichtung des Fahrzeugs zu versorgen,
- eine erste Abdeckklappe, die im Gerätekörper der Stromversorgungseinheit (1) zwischen einer Abdeckposition, in der sie den Ausgangssteckverbinder (23) verdeckt, und einer eingezogenen Position, in der sie den Zugriff auf den Ausgangssteckverbinder (23) freigibt, quer bewegbar ist,
- ein erstes Rückstellmittel, das die erste Abdeckklappe in ihre Abdeckposition beaufschlagt,
**dadurch gekennzeichnet, dass** sie umfasst:
- eine zweite Abdeckklappe, wobei die Abdeckklappen (8, 9) in dem Gerätekörper der Stromversorgungseinheit (1) zwischen einer Abdeckposition, in der sie jeweils einen Teil des Ausgangssteckverbinders (23) verdecken, und einer eingezogenen Position, in der sie den Zugang zum Ausgangssteckverbinder (23) freigeben, quer bewegbar sind,
- ein zweites Rückstellmittel, wobei die Rückstellmittel die Abdeckklappen (8, 9) in Richtung auf die Abdeckposition beaufschlagen,
- einen jeweiligen Klappennocken (21, 22), der auf jeder der Abdeckklappen (8, 9) vorgesehen und dazu ausgestaltet ist, von einem oder mehreren feststehenden Schiebeelementen (37), die in dem Aufnahmefach (25) des Fahrzeugs bereitgestellt werden, zurückgeschoben zu werden, um die Abdeckklappen (8, 9) gegen die Rückstellmittel bis in die eingezogene Position quer auseinander zu schieben, wenn die Stromversorgungseinheit (1) in Richtung auf den Fahrzeugsteckverbinder (30) in dem Aufnahmefach (25) des Fahrzeugs in Eingriff gebracht wird.

2. Stromversorgungseinheit nach Anspruch 1, **dadurch gekennzeichnet, dass**:
- die Abdeckklappen (8, 9) um jeweilige Drehachsen (10, 11) herum drehbar montiert sind, wobei die Drehachsen (10, 11) in dem Gerätekörper der Stromversorgungseinheit (1) feststehend sind, wobei sie auf beiden Seiten einer mittleren Längsebene (12) des Ausgangssteckverbinders (23) verlagert und in der Nähe eines jeweiligen ersten Endes der Abdeckklappen (8, 9) angeordnet sind,
- die jeweiligen Nocken (21, 22) der Abdeckklappen (8, 9) sind aufeinander zu gerichtet sind, auf beiden Seiten der mittleren Längsebene (12) des Ausgangssteckverbinders (23) zwischen den Drehachsen (10, 11) in einer Längsnut (13) der Stromversorgungseinheit (1), die an ihrem ersten Ende (6) ausmündet, angeordnet sind und dazu ausgestaltet sind, von einem gleichen feststehenden Schiebeelement (37), das selber dazu ausgestaltet ist, nach und nach dazwischen in der Längsnut in Eingriff zu kommen, wenn die Stromversorgungseinheit (1) in Richtung auf den Fahrzeugsteckverbinder (30) in dem Aufnahmefach (25) des Fahrzeugs in Eingriff gebracht wird, auseinander zurückgeschoben zu werden.

3. Stromversorgungseinheit (1) nach Anspruch 2, **dadurch gekennzeichnet, dass** die Abdeckklappen (8, 9) auf einer jeweiligen Innenseite (8b, 9b) in der Nähe ihres jeweiligen zweiten Endes (8c, 9c), das den jeweiligen Drehachsen (10, 11) gegenüberliegt, Eingriffsmittel (42) umfassen, die dazu ausgestaltet sind, mit entsprechenden Festhaltemitteln (43) zusammenzuwirken, die in dem Gerätekörper der Stromversorgungseinheit (1) angeordnet sind, um der Drehung der Abdeckklappen (8, 9) aus ihrer Abdeckposition bei einem Axialschub (FN), der von einem Benutzer auf eine jeweilige externe Seite (8d, 9d) der Abdeckklappen (8, 9) ausgeübt wird, entgegenzuwirken.

4. Stromversorgungseinheit (1) nach einem der Ansprüche 2 oder 3, **dadurch gekennzeichnet, dass** die Abdeckklappen (8, 9) in der Nähe ihres jeweiligen zweiten Endes (8c, 9c) gegenüber den jeweiligen Drehachsen (10, 11) magnetische Anziehungskraftmittel (44, 45) umfassen, die dazu angeordnet sind, eine Festhaltekraft zu erzeugen, die der relativen Drehung der Abdeckklappen (8, 9) aus ihrer Abdeckposition heraus auseinander entgegenwirkt.

5. Stromversorgungseinheit (1) nach einem der Ansprüche 2 bis 4, **dadurch gekennzeichnet, dass** sie eine Aussparung (16) umfasst, die auf das erste Ende (6) und auf die obere Seite der Stromversorgungseinheit, die der Längsnut (13) gegenüberliegt, offen ist, und die dazu ausgestaltet ist, das vorstehende Eindringen des Fahrzeugsteckverbinders (30) zu erlauben, wenn die Stromversorgungseinheit (1) mit dem Aufnahmefach (25), das dem Fahrzeug entspricht, in Eingriff gebracht wird.

6. Stromversorgungseinheit (1) nach einem der Ansprüche 1 bis 5, **dadurch gekennzeichnet, dass** sie an ihrem ersten Ende (6) ein oder mehrere Führungsräume (19, 20) umfasst, in die Führungsfinger (38, 39) eindringen können, die in dem Aufnahmefach (25), das dem Fahrzeug entspricht, vorstehen und die Führung der Stromversorgungseinheit (1) sicherstellen wenn sie in dem Aufnahmefach (25), das dem Fahrzeug entspricht, in Eingriff gebracht wird.

7. Stromversorgungseinheit (1) nach einem der Ansprüche 1 bis 6, **dadurch gekennzeichnet, dass** sie ein Bordladegerät (3) umfasst, das einen Ausgang aufweist, der an die elektrische Akkumulatorbatterie (2) angeschlossen ist, die einen Eingang aufweist, der für den Anschluss derselben an eine äußere Stromquelle ausgestaltet ist und das erste Ende (6) der Stromversorgungseinheit (1) bildet.

8. Fahrzeug, umfassend ein Aufnahmefach (25), das dazu ausgestaltet ist, eine Stromversorgungseinheit (1) nach einem der Ansprüche 1 bis 7 aufzunehmen und zu enthalten, wobei das Aufnahmefach (25) eine Länge in einer Erstreckungsrichtung (II-II) zwischen einem ersten Ende (29), das einen Fahrzeugsteckverbinder (30) umfasst, und einem zweiten gegenüberliegenden Ende (31) aufweist, wobei das Aufnahmefach (25) durch zwei Seitenwände (32, 33) begrenzt ist, die einander gegenüberliegen und durch einen Boden (34) miteinander verbunden sind, mit einer Öffnung (35), die dem Boden (34) gegenüberliegt, zum Einführen und Entnehmen der Stromversorgungseinheit (1), wobei der Boden (34) einen Längsstabilisierungsflügel (37) umfasst, der ein feststehendes Schiebeelement bildet, an dem die Klappennocken (21, 22) zum Anschlag kommen und zum Bewegen der Abdeckklappen (8, 9) bis in ihre eingezogene Position, wenn die Stromversorgungseinheit (1) in Richtung auf den Fahrzeugsteckverbinder (30) in das Aufnahmefach (25) eingeführt werden, zurückgeschoben werden.

9. Fahrzeug nach Anspruch 8, **dadurch gekennzeichnet, dass** das Aufnahmefach (25) an seinem ersten Ende (29) einen oder mehrere vorstehende Führungsfinger (38, 39) umfasst, die dazu ausgestaltet sind, mit Führungsräumen (19, 20) in Eingriff zu kommen, die dem ersten Ende (6) der Stromversorgungseinheit (1) entsprechen, um die Führung der Stromversorgungseinheit (1) sicherzustellen, wenn diese mit dem Aufnahmefach (25) in Eingriff gebracht wird.

10. Fahrzeug nach einem der Ansprüche 8 oder 9, **dadurch gekennzeichnet, dass** das Aufnahmefach (25) an seinem ersten Ende (29) vorstehende Schutzfinger (40, 41) umfasst, die dazu ausgestaltet sind, der Quereindringung der Stromversorgungseinheit (1) in der von dem Fahrzeugsteckverbinder (30) eingenommenen Zone entgegenzuwirken.

11. Fahrzeug nach einem der Ansprüche 8 bis 10, umfassend eine Stromversorgungseinheit (1) nach einem der Ansprüche 1 bis 7.

12. Externes Ladegerät (47), umfassend einen Sockel (48), der einen Aufnahmeraum (49) aufweist, der dazu ausgestaltet ist, das erste Ende (6) einer Stromversorgungseinheit (1) nach einem der Ansprüche 1 bis 7 aufzunehmen und festzuhalten, wobei der Aufnahmeraum (49) einen Boden aufweist, der mit einem Ladegerätesteckverbinder (51) versehen ist, der dazu ausgestaltet ist, axial trennbar mit dem Ausgangssteckverbinder (23) der Stromversorgungseinheit (1) in Eingriff zu kommen, und somit eine elektrische Verbindung mit der elektrischen Akkumulatorbatterie (2) herzustellen, um sie aufzuladen, wobei der Aufnahmeraum (49) einen Stabilisierungsflügel (50) umfasst, der ein feststehendes Schiebeelement bildet, an dem die Klappennocken (21, 22) zum Anschlag kommen und zum Bewegen der Abdeckklappen (8, 9) bis in ihre eingezogene Position, wenn die Stromversorgungseinheit (1) in den Aufnahmeraum (49) eingeführt werden, zurückgeschoben werden.

## Claims

1. Removable power supply unit (1) for a vehicle, having a unit body with a length between a first end (6) and a second end (7) along a direction of elongation (I-I), shaped to be introduced into a corresponding receiving compartment (25) of the vehicle, and comprising:
- an electrical storage battery (2),
- an output connector (23), frontally arranged at the first end (6) of the unit body of the power supply unit (1), having electrical conductors connected to said electrical storage battery (2), and shaped to releasably engage axially with a vehicle connector (30) and thereby establish an electrical connection with said electrical storage battery (2) for powering vehicle equipment,
- a first blanking shutter, movable transversely in the unit body of the power supply unit (1) between a blanking position
in which it covers the output connector (23) and a retracted position in which it frees access to the output connector (23),
- a first biasing means biasing said first blanking shutter towards its blanking position, **characterized in that** it comprises:
- a second blanking shutter, said blanking shutters (8, 9) being transversely displaceable in the unit body of the power supply unit (1) between a blanking position in which they each cover a part of the output connector (23) and a retracted position in which they clear access to the output connector (23),
- a second biasing means, said biasing means biasing the blanking shutters (8, 9) towards said blanking position,
- a respective shutter cam (21, 22), provided on each of said blanking shutters (8, 9), and shaped to be baised by one or more fixed thrust members (37) provided in the receiving compartment (25) of the vehicle so as to move said blanking shutters (8, 9) transversely away from each other against said biasing means to said retracted position upon engagement of the power supply unit (1) towards the vehicle connector (30) in the vehicle receiving compartment (25).

2. Power supply unit according to claim 1, **characterized in that**:
- the blanking shutters (8, 9) are mounted so as to be rotatable about respective axes of rotation (10, 11), said axes of rotation (10, 11) being fixed in the unit body of the power supply unit (1), offset on either side of a median longitudinal plane (12) of the output connector (23), and arranged in the vicinity of a respective first end of said blanking shutters (8, 9),
- the respective cams (21, 22) of the blanking shutters (8, 9) are oriented towards each other, arranged on either side of said median longitudinal plane (12) of the output connector (23), between said axes of rotation (10, 11), in a longitudinal groove (13) of the power supply unit (1) opening at the first end (6) thereof, and shaped so as to be pushed apart by a single fixed thrust member (37) which is itself shaped to be progressively engaged between them in said longitudinal groove (13) as the power supply unit (1) is engaged in the direction of the vehicle connector (30) in the vehicle receiving compartment (25).

3. Power supply unit (1) according to claim 2, **characterized in that** the blanking shutters (8, 9) comprise, on a respective inner face (8b, 9b), in the vicinity of their respective second ends (8c, 9c) opposite the respective axes of rotation (10, 11), engagement means (42) shaped to cooperate with corresponding retaining means (43) arranged in the unit body of the power supply unit (1) to oppose rotation of said blanking shutters (8, 9) away from their blanking position upon an axial thrust (FN) exerted by a user on a respective outer face (8d, 9d) of said blanking shutters (8, 9).

4. Power supply unit (1) according to one of claims 2 or 3, **characterized in that** the blanking shutters (8, 9) comprise, in the vicinity of their respective second ends (8c, 9c) opposite the respective axes of rotation (10, 11), magnetic attraction means (44, 45) arranged to produce a retaining force opposing the relative rotation of said blanking shutters (8, 9) away from each other from the blanking position thereof.

5. Power supply unit (1) according to any one of claims 2 to 4, **characterized in that** it comprises a recess (16), open on the first end (6) and on the upper face of the power supply unit opposite said longitudinal groove (13), and shaped to allow the penetration of the protruding vehicle connector (30) upon engagement of the power supply unit (1) in the corresponding receiving compartment (25) of the vehicle.

6. Power supply unit (1) according to any one of claims 1 to 5, **characterized in that** it comprises at its first end (6) one or more guide recesses (19, 20) into which guide fingers (38, 39) projecting into the corresponding receiving compartment (25) of the vehicle may penetrate, guiding the power supply unit (1) as it engages in the corresponding receiving compartment (25) of the vehicle.

7. Power supply unit (1) according to any one of claims 1 to 6, **characterized in that** it comprises an on-board charger (3), having an output connected to said electrical storage battery (2), having an input shaped for the connection thereof to an external source of electrical energy, and forming the first end (6) of the power supply unit (1).

8. Vehicle comprising a receiving compartment (25) shaped to receive and contain a power supply unit (1) according to any one of claims 1 to 7, the receiving compartment (25) having a length along a direction of elongation (II-II) between a first end (29) comprising a vehicle connector (30) and an opposite second end (31), the receiving compartment (25) being limited by two side walls (32, 33) opposite each other and connected to each other by a bottom (34), with an opening (35) opposite the bottom (34) for the insertion and removal of the power supply unit (1), the bottom (34) comprising a longitudinal fin (37) forming a fixed thrust member against which said shutter cams (21, 22) abut and are pushed back to move the blanking shutters (8, 9) into their retracted position when the power supply unit (1) is introduced in the direction of the vehicle connector (30) in said receiving compartment (25).

9. Vehicle according to claim 8, **characterized in that** the receiving compartment (25) has, at its first end (29), one or more projecting guide fingers (38, 39) shaped to engage in corresponding guide recesses (19, 20) in the first end (6) of the power supply unit (1), to guide the power supply unit (1) as it is engaged in the receiving compartment (25).

10. Vehicle according to one of claims 8 or 9, **characterized in that** the receiving compartment (25) has, at its first end (29), projecting protective fingers (40, 41) shaped to oppose transverse penetration of the power supply unit (1) into the area occupied by the vehicle connector (30).

11. Vehicle according to any one of claims 8 to 10, comprising a power supply unit (1) according to any one of claims 1 to 7.

12. External charger (47), comprising a base (48) having a receiving recess (49) shaped to receive and retain the first end (6) of a power supply unit (1) according to any one of claims 1 to 7, the receiving recess (49) having a bottom provided with a charger connector (51) shaped to releasably engage axially with the output connector (23) of said power supply unit (1) and thereby establish an electrical connection with said electrical storage battery (2) for recharging it, the receiving recess (49) comprising a fin (50) forming a fixed thrust member against which said shutter cams (21, 22) abut and are pushed back to move the blanking shutters (8, 9) into their retracted position when the power supply unit (1) is inserted into said receiving recess (49).
